# EUROPEAN PATENT SPECIFICATION

(11) **EP 4 528 636 B1**
(45) Date of publication and mention of the grant of the patent: **17.06.2026**
(21) Application number: 23826336.2
(22) Date of filing: 19.06.2023
(51) Int. Cl.: G06T 7/00, G05D 1/242, G05D 1/246, G05D 1/622, G05D 105/15, G05D 107/20, G05D 109/10, G05D 111/10, G05D 111/50, G05D 1/248

(54) **ABNORMAL REGION CALIBRATION METHOD AND RELATED DEVICE**
VERFAHREN ZUR KALIBRIERUNG EINES ANORMALEN BEREICHS UND ZUGEHÖRIGE VORRICHTUNG
PROCÉDÉ D'ÉTALONNAGE DE RÉGION ANORMALE ET DISPOSITIF ASSOCIÉ

(30) Priority: 21.06.2022 CN 202210707254
(43) Date of publication of application: 26.03.2025
(73) Proprietor: Shenzhen Mammotion Innovation Co., Limited, Shenzhen, Guangdong 518000 (CN)
(72) Inventor: ZHANG, Weifu, Shenzhen, Guangdong 518000 (CN); WEI, Jidong, Shenzhen, Guangdong 518000 (CN)
(74) Representative: Huang, Liwei
(86) International application number: PCT/CN2023/101031
(87) International publication number: WO 2023/246688

(56) References cited:
- WO-A1-2018/108179
- WO-A1-2021/115206
- CN-A- 107 128 311
- CN-A- 113 026 495
- CN-A- 113 625 701
- US-A1- 2021 034 062
- US-A1- 2022 167 820

## Description

### Technical Field

The present disclosure relates to the field of electronic technologies, and in particular, to an abnormal area marking method and a related apparatus.

### Background Art

With a growing number of green spaces in urban squares and residential areas, the workload for lawn maintenance has become increasingly heavy. An abnormal area may be encountered during an operation process of a robotic lawn mower, resulting in the risk of stranding or overturning of the robotic lawn mower, which in turn affects the normal operation.

Therefore, how to accurately determine and mark the abnormal area becomes an urgent problem to be solved

. The prior art US20210034062A1 has disclosed a mobile robot rotates a spin mop to move a main body along a surface and clean the surface. A location change of the main body during its motion is analyzed to determine if the robot is traveling abnormally. If abnormal traveling is occurring, the location where it is occurring is stored and re-cleaning of the location is initiated. The location where abnormal traveling occurred may be considered in next cleaning to improve cleaning efficiency.

The prior art WO2018108179A1 has disclosed a method for giving an alarm on a positioning fault of an autonomous moving device. The autonomous moving device is configured to autonomously move, according to the positioning on the autonomous moving device, in a working region defined by a map. The method comprises: receiving positioning data from a satellite positioning system, so as to position an autonomous moving device; checking whether a positioning fault occurs on the autonomous moving device; and in response to the detected positioning fault occurring on the autonomous moving device, giving an alarm on the positioning fault.
The prior art WO2021115206A1 has disclosed a self-moving device (20) and a working method therefor. The self-moving device (20) comprises: a first control module and a second control module, wherein the first control module and the second control module are configured to communicate with each other to work cooperatively so as to control a moving mechanism (37) and a working module; the second control module is configured to control the self-moving device (20) to execute a safety assurance operation and perform self-check on hardware and a control program related to the control and running of the safety assurance operation; and in the first control module and the second control module, only the second control module executes, according to a preset plan, self-check in a working process of the self-moving device (20). The self-moving device (20) has a high safety performance.

### Summary

Embodiments of the present disclosure provide an abnormal area marking method and a related apparatus, to help accurately determine an abnormal area that exists in an operation area of a robotic lawn mower and a type of the abnormal area, and configure an operation route based on different types, so that the risk of stranding or overturning of the robotic lawn mower can be effectively reduced, and the mowing efficiency can be improved.

The invention is set out in the appended set of claims.

According to a first aspect, an embodiment of the present disclosure provides an abnormal area marking method, where the method is applied to a robotic lawn mower and includes:
when a predicament is detected during an operation process, determining an area at a current position as an abnormal area;
obtaining a sensing data set within a specified time period during the operation process, where the sensing data set is a set of data acquired by a sensor, and the specified time period represents a safe traveling time period before the robotic lawn mower gets into the predicament;
determining abnormality description information of the abnormal area based on the sensing data set, where the abnormality description information represents a type of a current abnormal area, and the type of the abnormal area includes a road surface depression and a road surface bulge; and
determining a target position corresponding to the abnormal area on an operation map, and establishing an association relationship between the target position and the abnormality description information.

According to a second aspect, an embodiment of the present disclosure provides an abnormal area marking apparatus, where the apparatus is used in a robotic lawn mower and includes: an obtaining unit, a determining unit, and a setting unit, where
the determining unit is configured to: when a predicament is detected during an operation process, determine an area at a current position as an abnormal area;
the obtaining unit is configured to obtain a sensing data set within a specified time period during the operation process, where the sensing data set is a set of data acquired by a sensor, and the specified time period represents a safe traveling time period before the robotic lawn mower gets into the predicament;
the determining unit is further configured to determine abnormality description information of the abnormal area based on the sensing data set, where the abnormality description information represents a type of a current abnormal area, and the type of the abnormal area includes a road surface depression and a road surface bulge; and
the setting unit is configured to determine a target position corresponding to the abnormal area on an operation map, and establish an association relationship between the target position and the abnormality description information.

According to a third respect, an embodiment of the present disclosure provides an electronic device, including a processor, a memory, a communication interface, and one or more programs, where the one or more programs are stored in the memory and configured to be executed by the processor, and the program includes instructions for performing the steps in the first aspect of the embodiments of the present disclosure.

According to a fourth aspect, an embodiment of the present disclosure provides a computer-readable storage medium, where the computer-readable storage medium stores a computer program for electronic data exchange, and the computer program enables a computer to execute instructions for some or all of the steps described in the first aspect of the embodiments of the present disclosure.

According to a fifth aspect, an embodiment of the present disclosure provides a computer program product, where the computer program product includes a non-transitory computer-readable storage medium storing a computer program, and the computer program is operable to cause a computer to perform some or all of the steps described in the first aspect of the embodiments of the present disclosure. The computer program product may be a software installation package.

**It** can be learned that the embodiments of the present disclosure disclose an abnormal area marking method and a related apparatus. The method includes: when a predicament is detected during an operation process, determining an area at a current position as an abnormal area; obtaining a sensing data set within a specified time period during the operation process, where the sensing data set is a set of data acquired by a sensor, and the specified time period represents a safe traveling time period before the robotic lawn mower gets into the predicament; determining abnormality description information of the abnormal area based on the sensing data set; and determining a target position corresponding to the abnormal area on an operation map, and establishing an association relationship between the target position and the abnormality description information. In this way, according to the method provided in the embodiments of the present disclosure, the abnormal area is determined based on related information of an operation area of the robotic lawn mower that is obtained by a sensing apparatus, the abnormal area is marked, and an avoidance plan is designed for the abnormal area, thereby reducing the occurrence of overturning or stranding of the robotic lawn mower during the operation process, and improving the operation efficiency of the robotic lawn mower.

### Brief Description of the Drawings

To describe the technical solutions in embodiments of the present disclosure or in the prior art more clearly, the following briefly describes the accompanying drawings required for describing the embodiments or the prior art. It is clear that the accompanying drawings in the following descriptions are merely some embodiments of the present disclosure, and those of ordinary skill in the art may still derive other drawings from these accompanying drawings without creative efforts.
FIG. 1 is a diagram of a structure of a robotic lawn mower according to an embodiment of the present disclosure;
FIG. 2A is a schematic flowchart of an abnormal area marking method according to an embodiment of the present disclosure;
FIG. 2B is a diagram of a scenario in which a structured light sensor acquires data at different moments according to an embodiment of the present disclosure;
FIG. 2C is a diagram of a scenario in which a type of an abnormal area is determined according to an embodiment of the present disclosure;
FIG. 2D is a diagram of another scenario in which a type of an abnormal area is determined according to an embodiment of the present disclosure;
FIG. 3A is a diagram of an example scenario in which a robotic lawn mower passes through a road surface bulge area according to an embodiment of the present disclosure;
FIG. 3B is a diagram of an example scenario in which a robotic lawn mower passes through a road surface depression area according to an embodiment of the present disclosure;
FIG. 4 is a diagram of a structure of an electronic device according to an embodiment of the present disclosure; and
FIG. 5 is a block diagram of functional units of an abnormal area marking apparatus according to an embodiment of the present disclosure.

### Detailed Description of Embodiments

In the specification, claims, and accompanying drawings of the present disclosure, the terms "first", "second", etc. are intended to distinguish between different objects but do not indicate a specific sequence. In addition, the terms "include", "have" and any variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification means that a particular characteristic, structure, or feature described with reference to embodiments may be included in at least one embodiment of the present disclosure. The phrase at various locations in the specification does not necessarily refer to the same embodiment, nor is it an independent or alternative embodiment mutually exclusive with another embodiment. It is explicitly and implicitly understood by those skilled in the art that the embodiments described in the specification may be combined with another embodiment.

To enable those skilled in the art to better understand the solutions in the present disclosure, the technical solutions in the embodiments of the present disclosure will be clearly and completely described below with reference to the accompanying drawings in the embodiments of the present disclosure.

To better understand the solutions in the embodiments of the present disclosure, the following first describes an electronic device, related concepts, and a context that may be involved in the embodiments of the present disclosure.

The electronic device involved in the embodiments of the present disclosure may include various handheld devices having a wireless communication function, vehicle-mounted devices, wearable devices, computing devices, or other processing devices connected to a wireless modem, and various forms of user equipment (UE), mobile stations (MS), terminal devices, etc. For ease of description, the devices mentioned above are collectively referred to as electronic devices. It should be further understood that, in some other embodiments, the electronic device may not be a portable electronic device but a desktop computer. For example, the electronic device may include a smart robotic lawn mower described in the embodiments of the present disclosure, a server that is communicatively connected to the smart robotic lawn mower, etc.

A real-time kinematic (RTK) technology is a differential method for processing carrier phase observations from two measurement stations in real time, in which a carrier phase acquired by a reference station is sent to a user receiver for calculating a difference to solve for coordinates. This is a new commonly used satellite positioning measurement method. The previous static measurement, fast static measurement, and dynamic measurement all require posterior resolution to obtain centimeter-level accuracy, while RTK is a measurement method that can achieve centimeter-level positioning accuracy in real time outdoors. RTK uses a carrier phase dynamic real-time differential method, and is a significant milestone in GPS disclosures. RTK has brought new measurement principles and methods for engineering stakeout, topographic mapping, and various control surveying, greatly improving the operation efficiency.

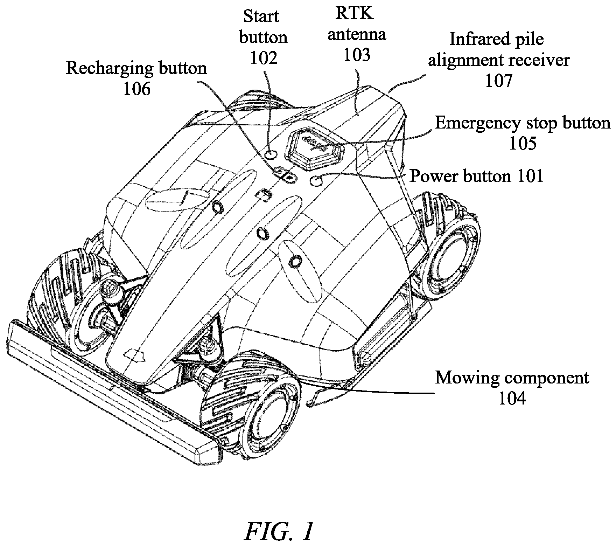

For example, referring to FIG. 1, FIG. 1 is a diagram of a structure of a robotic lawn mower according to an embodiment of the present disclosure. In an actual application scenario, the robotic lawn mower can be started with a power button 101 and a start button 102 to perform a mowing task, and the robotic lawn mower is navigated by an RTK antenna 103 during execution of the mowing task. Specifically, when the robotic lawn mower performs the mowing task in a mowing area through a mowing component 104 disposed at the bottom of the vehicle, sensors disposed on the vehicle body can acquire environment-related data in real time during an operation process. The sensors include: a collision sensor, a forward ultrasonic sensor, a lateral ultrasonic sensor, and a rain sensor. If an emergency occurs during the operation process, the robotic lawn mower can be stopped with an emergency stop button 105. Alternatively, if the robotic lawn mower is about to run out of power during the operation process, a recharging function of the robotic lawn mower can be enabled with a recharging button 106. While the robotic lawn mower is navigated and guided by the RTK antenna 103 to a charging pile, an infrared pile alignment receiver 107 on the vehicle body can detect a position and an orientation of the charging pile in real time, so as to finally complete an operation of charging at the charging pile.

On the basis of the robotic lawn mower described in FIG. 1, an abnormal area marking method provided in the present disclosure is performed. The method specifically includes the following steps:
when a predicament is detected during an operation process, determining an area at a current position as an abnormal area;
obtaining a sensing data set within a specified time period during the operation process, where the sensing data set is a set of data acquired by a sensor, and the specified time period represents a safe traveling time period before the robotic lawn mower gets into the predicament;
determining abnormality description information of the abnormal area based on the sensing data set, where the abnormality description information represents a type of a current abnormal area, and the type of the abnormal area includes a road surface depression and a road surface bulge; and
determining a target position corresponding to the abnormal area on an operation map, and establishing an association relationship between the target position and the abnormality description information.

It can be learned that the electronic device described in the embodiments of the present disclosure may be configured to implement an abnormal area marking method disclosed in the embodiments of the present disclosure. The method includes: when a predicament is detected during an operation process, determining an area at a current position as an abnormal area; obtaining a sensing data set within a specified time period during the operation process, where the sensing data set is a set of data acquired by a sensor, and the specified time period represents a safe traveling time period before the robotic lawn mower gets into the predicament; determining abnormality description information of the abnormal area based on the sensing data set; and determining a target position corresponding to the abnormal area on an operation map, and establishing an association relationship between the target position and the abnormality description information. In this way, according to the method provided in the embodiments of the present disclosure, the abnormal area is determined based on related information of an operation area of the robotic lawn mower that is obtained by a sensing apparatus, the abnormal area is marked, and an avoidance plan is designed for the abnormal area, thereby reducing the occurrence of overturning or stranding of the robotic lawn mower during the operation process, and improving the operation efficiency of the robotic lawn mower.

To better understand the technical solutions of the present disclosure, the following describes the present disclosure in detail with reference to specific embodiments.

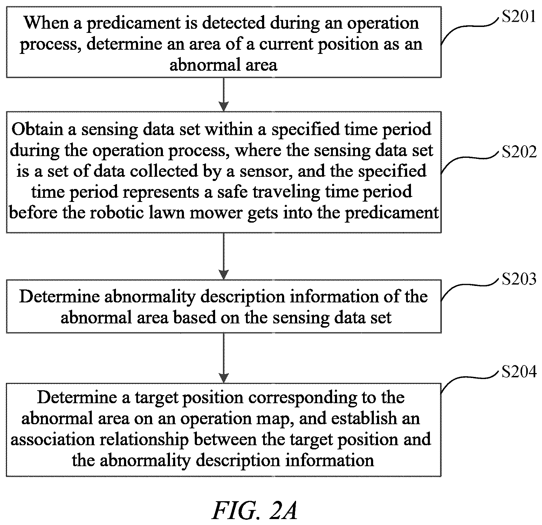

Referring to FIG. 2A, FIG. 2A is a schematic flowchart of an abnormal area marking method according to an embodiment of the present disclosure. As shown in FIG. 2A, the abnormal area marking method in the present disclosure is applied to the robotic lawn mower shown in FIG. 1 and specifically includes the following operation steps.

S201: When a predicament is detected during an operation process, determine an area at a current position as an abnormal area.

Specifically, that a predicament is detected means that the robotic lawn mower gets into an abnormal traveling state during the operation process, where the abnormal traveling state includes, but is not limited to: vehicle rollover, tire slip, inability to travel, etc.

In actual application, a distance that the robotic lawn mower should have traveled at a normal traveling speed within a preset time period is determined through a wheel speedometer and a timer of the robotic lawn mower, and it is detected that the current robotic lawn mower has not moved or has moved a distance far less than this distance. Further, through GPS and RTK positioning detection of the vehicle, if it is determined that the current position of the robotic lawn mower has not changed, it indicates that the robotic lawn mower may be faulty, coordinate information of a current area is obtained, and the current area is marked.

Further, an acceleration value, angular velocity value, and attitude angle of a driving wheel and other data output by a built-in gyroscope of the robotic lawn mower are obtained to calculate whether the robotic lawn mower encounters an abnormal area, for example, an uneven lawn and a large slope, during a mowing operation process. If it is determined, based on the above data of the gyroscope, that a deflection angle of the driving wheel of the robotic lawn mower is currently abnormal, coordinates of the current position are marked as an abnormal area. The gyroscope that can be used by the robotic lawn mower includes a gyroscope module GGPM61-C01 developed based on a high-performance gyroscope sensor, and the GGPM61-C01 is a low-cost and small sensor for heading angle output based on a QMEMS sensor. Depending on a high-precision sensor, a high-performance processor, and a digital signal processing algorithm, the GGPM61 outputs an extremely stable heading angle, a real-time angular velocity, and a real-time temperature.

Further, if a current wheel rotation speed is not greater than a normal rotation speed threshold, data of a built-in ground clearance sensor of the robotic lawn mower is obtained, where the data of the ground clearance sensor is used to detect a height of the bottom of the robotic lawn mower from the ground during a traveling process of the vehicle. If it is determined, based on the data of the ground clearance sensor, that the current height of the bottom of the robotic lawn mower from the ground is greater than a normal traveling height, it indicates that the robotic lawn mower may have a rollover fault in the current area, and further the coordinates of the current position are marked as an abnormal area.

It should be noted that the above method for determining the occurrence of an abnormal phenomenon of the robotic lawn mower is only one of possible methods, and there are other optional solutions for determining the occurrence of abnormality of the robotic lawn mower in actual application. Details are not described herein.

S202: Obtain a sensing data set within a specified time period during the operation process, where the sensing data set is a set of data acquired by a sensor, and the specified time period represents a safe traveling time period before the robotic lawn mower gets into the predicament.

For example, a structured light sensor is disposed on the robotic lawn mower. Specifically, the structured light sensor includes a camera module and a single-line laser signal transmission module. The robotic lawn mower continuously obtains the sensing data set acquired by the structured light sensor during the traveling process.

Specifically, after the robotic lawn mower has a functional fault and the abnormal area is marked, the robotic lawn mower obtains the data acquired by the sensor within the specified time period, that is, the time period before the robotic lawn mower safely travels to the abnormal area.

Specifically, in step S201, data in the sensing data set acquired by the structured light sensor may be used to determine whether there is an abnormal area in the current operation area of the robotic lawn mower. The abnormal area includes, but is not limited to, a road surface depression and/or road surface bulge condition in the current area.

S203: Determine abnormality description information of the abnormal area based on the sensing data set.

Further, sensing data is processed and analyzed based on the sensing data set obtained in step S202, and the abnormality description information of the current abnormal area is determined based on a data analysis result. The abnormality description information represents a type of a current abnormal area, and the type of the abnormal area includes a road surface depression and a road surface bulge.

Specifically, the above abnormality description information includes, but is not limited to, a type description message of the abnormal area, an area size description information of the abnormal area, etc.

Generally, a ranging principle of the structured light sensor is based on visual measurement using line structured light, including determining whether there is an abnormal area in the current operation area based on image data acquired by the camera module, and determining a height difference of the abnormal area based on laser signal data transmitted by a single-line laser transmitter according to a triangulation ranging principle. Specifically, the laser transmitter of the structured light sensor transmits a line laser signal at a certain angle; after encountering an object, the line laser signal is reflected back; and after detecting the reflected signal, the structured light sensor determines a straight-line distance between the current reflector and the transmitter of the structured light sensor based on signal propagation duration. Further, the height difference between the abnormal area and a normal area can be calculated based on a geometric triangle relationship in the structure. Then, complete description information of the abnormal area is determined based on a size of the abnormal area that is determined based on the image data and the height difference that is determined based on the single-line laser signal.

For example, the robotic lawn mower determines a road surface condition of the current operation area based on the sensing data set of the structured light sensor obtained during the traveling process of the robotic lawn mower. Specifically, a distance between a current road surface reflecting a signal and the structured light sensor is determined based on the length of time that the reflected signal is received by the structured light sensor; and further, a straight-line distance between the abnormal area and the robotic lawn mower is determined according to the triangulation ranging principle.

In another possible example, a separate vehicle body camera may further be disposed on the robotic lawn mower, and the above sensing data set may alternatively be acquired by the camera on the robotic lawn mower. Specifically, the vehicle body camera acquires the image data of the current operation area during the traveling process of the robotic lawn mower, and data of a plurality of images acquired in real time forms an image data set. The robotic lawn mower obtains the image data set.

Further, the robotic lawn mower analyzes data of two consecutive frames of images in the image data set to determine a grayscale change of the images acquired during the traveling process, and determines that the grayscale change of the data of the two consecutive frames of images meets a preset threshold. In this case, edge detection is further performed on data of a latest frame of image, to determine that there is an abnormal area in the current operation area.

S204: Determine a target position corresponding to the abnormal area on an operation map, and establish an association relationship between the target position and the abnormality description information.

For example, the robotic lawn mower obtains map information of the current operation area through a GPS positioning system, and determines, based on the marking of the abnormal area, related information of the target position corresponding to the abnormal area on the map, where the related information includes coordinate information of the abnormal area.

Further, the association relationship is established between the target position and the abnormality description information, association information of the current abnormal area is added to the coordinate information of the abnormal area, and the related information of the abnormal area on the map is updated.

In another possible example, there may also be a plurality of robotic lawn mowers operating simultaneously in the same operation area. In a current operation area, if a robotic lawn mower is stranded due to entering an abnormal area (for example, the abnormal area is a depression area), the robotic lawn mower may receive abnormality information uploaded by this vehicle, where the abnormality information includes a stranded position of this robotic lawn mower. Then, coordinate information of the stranded position is obtained from the map of the operation area, and a type of the abnormal area is added to the coordinate information. Further, the robotic lawn mower sends the coordinate information of the abnormal area to a control end of surrounding robotic lawn mowers that are performing operation. In this way, it can be ensured that the surrounding vehicles obtain the information of the abnormal area in time, and replan operation routes, to ensure the normal progress of the operation.

It can be learned that, in an implementation of the present disclosure, when a predicament is detected during an operation process, the robotic lawn mower determines an area at a current position as an abnormal area; the robotic lawn mower obtains a sensing data set within a specified time period during the operation process, where the sensing data set is a set of data acquired by a sensor, and the specified time period represents a safe traveling time period before the robotic lawn mower gets into the predicament; the robotic lawn mower determines abnormality description information of the abnormal area based on the sensing data set; and the robotic lawn mower determines a target position corresponding to the abnormal area on an operation map, and establishes an association relationship between the target position and the abnormality description information. In this way, according to the method provided in the embodiments of the present disclosure, the abnormal area is determined based on related information of an operation area of the robotic lawn mower that is obtained by a sensing apparatus, the abnormal area is marked, and an avoidance plan is designed for the abnormal area, thereby reducing the occurrence of overturning or stranding of the robotic lawn mower during the operation process, and improving the operation efficiency of the robotic lawn mower.

In a possible example, the sensors include a structured light sensor, and the structured light sensor includes a camera module and a single-line laser signal transmission module. In terms of the obtaining a sensing data set within a specified time period during the operation process, the method further includes the following steps: obtaining first sensing data of the robotic lawn mower at a first moment, where the first sensing data indicates a data stream captured by the structured light sensor during a traveling process of the robotic lawn mower, the data stream includes scanning data of the robotic lawn mower in a current operation area, and the scanning data includes image data and single-line laser signal transmission data; obtaining second sensing data of the robotic lawn mower at a second moment, where there is a preset time interval between the first moment and the second moment; and constructing the sensing data set based on the first sensing data and the second sensing data.

For example, when the robotic lawn mower performs a mowing task in the current operation area, the single-line laser signal transmission module transmits signals to the ground in the current operation area by transmitting lasers at a frequency of a preset time interval and at a certain angle, and when the signal intersects with the ground in the current operation area, an intersection point A is formed, and the camera shoots from other directions images with the intersection point A. The structured light sensor is disposed on the robotic lawn mower.

Further, the robotic lawn mower continuously obtains the scanning data of the structured light sensor in the current operation area, where the scanning data includes the image data and the single-line laser signal transmission data, and forms the sensing data set. Specifically, it is assumed that the preset time interval is T, and sending start time is t₀. The robotic lawn mower may obtain, in real time, the first sensing data of a single-line lidar signal sent at the moment t₀ and received by the structured light sensor, the second sensing data of a single-line lidar signal sent at a moment t₀+T, and so on. Details are not described herein.

The preset time interval may be set by a user, or may be a default value of the system, which is not limited herein. The preset time interval may be 1s, 5s, 1 min, etc., which is not limited herein. The structured light sensor may send signals through the single-line laser signal transmission module or transmission apparatus at the preset time interval, to acquire the single-line laser signal transmission data. The camera module captures image data including at least one intersection point based on intersection points of single-line laser signals and the ground. The robotic lawn mower may obtain, in real time, the sensing data generated by the above structured light sensor.

It can be learned that, in an implementation of the present disclosure, the robotic lawn mower may obtain, in real time, the sensing data acquired by the structured light sensor on the robotic lawn mower, to construct a sensing data set. Then, the obtained sensing data set is used to determine related information of the abnormal area.

In a possible example, the scanning data includes the image data and the single-line laser signal transmission data. In terms of the determining abnormality description information of the abnormal area based on the sensing data set, the method specifically includes the following steps: determining an area size of the abnormal area in the operation area based on the image data in the first sensing data and the second sensing data; determining a height difference h between the abnormal area and a normal operation area based on the single-line laser signal transmission data in the first sensing data and the second sensing data, where the height difference h represents a vertical distance that the abnormal area bulges upwards or sinks downwards; determining a type of the abnormal area based on the height difference h, where the type of the abnormal area includes a road surface depression and a road surface bulge; if a height corresponding to the abnormal area is greater than a height corresponding to the normal operation area, it indicates that the type of the abnormal area is the road surface depression; or if a height corresponding to the abnormal area is less than a height corresponding to the normal operation area, it indicates that the type of the abnormal area is the road surface bulge; and determining abnormality description information of the abnormal area based on the area size of the abnormal area and the type of the abnormal area, where the abnormality description information represents a type of a current abnormal area, and the type of the abnormal area includes a road surface bulge and a road surface depression.

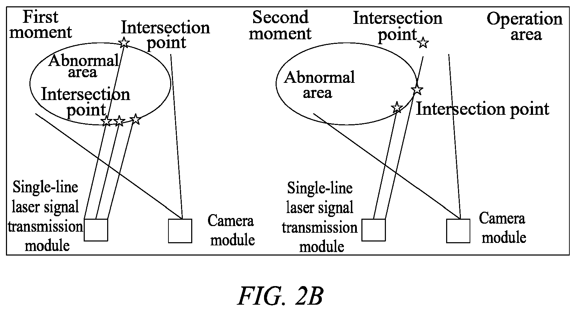

Specifically, data processing and analysis are performed on the image data in the first sensing data and the second sensing data. For an actual application scenario, refer to a diagram of a scenario in which the structured light sensor acquires data at different moments shown in FIG. 2B. FIG. 2B shows a case in which single-line laser signals transmitted by the single-line laser signal transmission module at the first moment and the second moment separately intersect with the abnormal area and a scope in which the camera module acquires the image data including at least one intersection point at the first moment and the second moment.

Further, based on data processing and data analysis performed on the image data of the first moment and the second moment, a boundary and shape of the current abnormal area are determined to form size information of the abnormal area.

Further, the type of the current abnormal area is calculated based on the single-line laser signal transmission data.

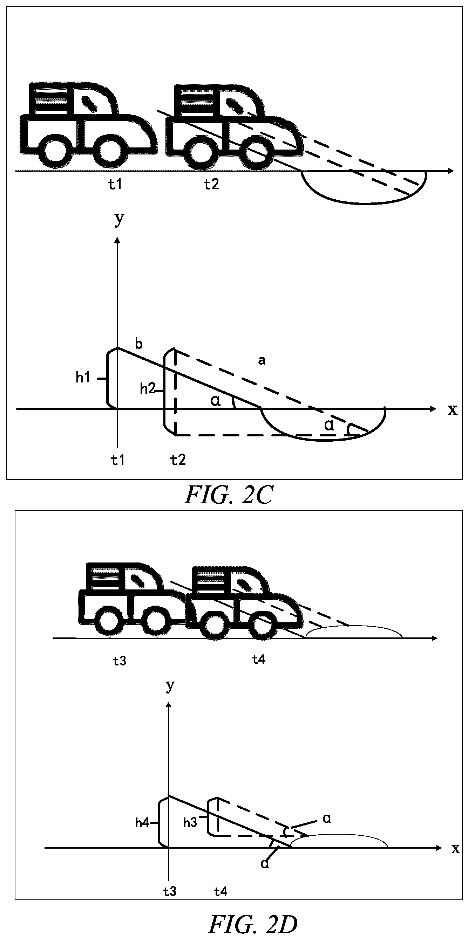

Specifically, the following provides description with reference to FIG. 2C, which is a diagram of a scenario in which a type of an abnormal area is determined according to an embodiment of the present disclosure. Refer to FIG. 2C.

For example, the robotic lawn mower currently performing a mowing operation in the operation area is represented in the form of a stick figure shown in FIG. 2C. An operation scenario of the robotic lawn mower is shown in the upper part of FIG. 2C. The robotic lawn mower starts traveling forward at a moment t₁, and the structured light sensor sends a single-line lidar signal and receives a reflected signal at the moment t₁. When a moment t₂ arrives, the structured light sensor on the robotic lawn mower continues to send a single-line lidar signal and receive a reflected signal. The presence of an abnormal area in the current operation area and a type of the abnormal area are determined based on reflected sensing data that is received by the structured light sensor at the moments t₁ and t₂.

Specifically, referring to a two-dimensional rectangular coordinate representation shown in the lower part of FIG. 2C, a rectangular coordinate system is established with the robotic lawn mower at the moment t₁ as the origin. Lengths of triangular hypotenuses a and b that respectively correspond to the moments t₁ and t₂ shown in FIG. 2C may be determined based on a propagation speed of the single-line lidar signal and a time for receiving the reflected signal. Further, vertical heights of the structured light sensor from the ground at the moment t₁ and the moment t₂ are respectively calculated based on relationships between sides and angles of right triangles: *h*₁*=a* sinα and *h*₂*=b* sinα.

Further, the height difference h between h₁ and h₂ is calculated to determine the type of the current abnormal area. As shown in FIG. 2C, *h₁-h₂ < 0*, which indicates that the current abnormal area is a road surface depression.

**In** another possible example, description is provided with reference to FIG. 2D, which is a diagram of another scenario in which a type of an abnormal area is determined according to an embodiment of the present disclosure. As shown in FIG. 2D:
specifically, vertical heights h₃ and h₄ of the structured light sensor from the ground at a moment t₃ and a moment t₄ are calculated according to the above process. It can be learned, based on a calculation result, that *h₃-h₄ > 0*, which indicates that the current abnormal area is a road surface bulge.

The preset time interval may be set by a user, or may be a default value of the system, which is not limited herein. The preset time interval may be 1s, 5s, 1 min, etc., which is not limited herein. The electronic device may send signals through a Bluetooth module at the preset time interval, to obtain through detection feedback signals sent by other devices.

A time interval between t₁ and t₂ and a time interval between t₃ and t₄ may be default values set based on the structured light sensor, or may be set by the user, which is not limited herein.

It can be learned that, in an implementation of the present disclosure, the robotic lawn mower can not only determine the area size of the abnormal area in the current operation area based on the image data in the sensing data set, but also determine the type of the abnormal area in the current operation area based on the single-line laser signal transmission data, and then construct the abnormality description information of the abnormal area based on the area size of the abnormal area and the type of the abnormal area.

In a possible example, after determining the type of the abnormal area based on the difference, the method further includes the following step: configure an avoidance plan for the abnormal area based on the type of the abnormal area, and control the robotic lawn mower to operate according to the avoidance plan.

For example, for different types of abnormal areas, methods for the robotic lawn mower to avoid the current area are different. After determining the type of the current abnormal area, the robotic lawn mower may set different avoidance plans for different abnormal areas.

It can be learned that, in an implementation of the present disclosure, the robotic lawn mower may be controlled to perform the mowing task based on different types of abnormal areas, to avoid the problem of overturning or stranding of the robotic lawn mower due to blindly moving forward without learning of road conditions, which affects the operation efficiency.

In a possible example, the type of the abnormal area is the road surface bulge. In terms of the configuring an avoidance plan for the abnormal area based on the type of the abnormal area, the method specifically includes the following steps: determining whether h exceeds a first threshold, where the first threshold is a safe height that does not cause the robotic lawn mower to be overturned; if it is determined that h does not exceed the first threshold, controlling the robotic lawn mower to operate consistently in the abnormal area; or if it is determined that h exceeds the first threshold, controlling the robotic lawn mower to bypass the abnormal area and then operate.

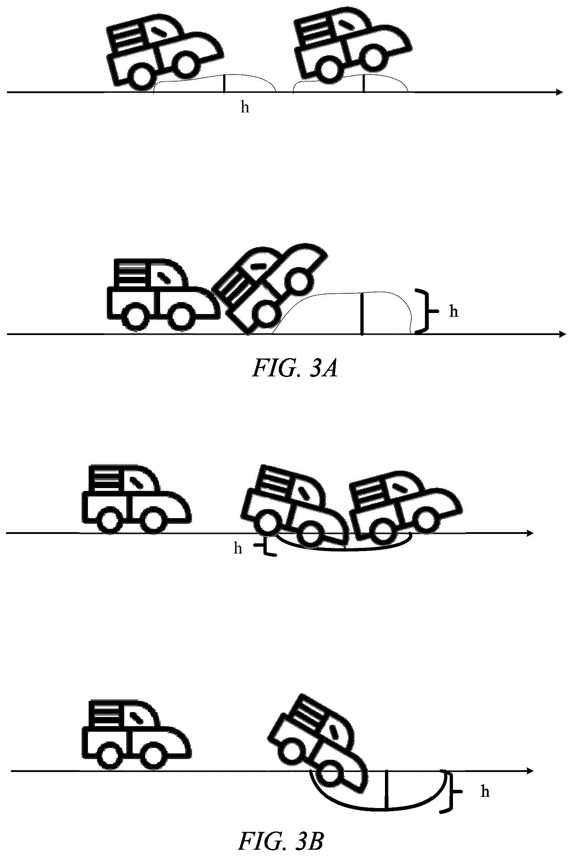

For example, referring to FIG. 3A, FIG. 3A is a diagram of an example scenario in which a robotic lawn mower passes through a road surface bulge area according to an embodiment of the present disclosure. To facilitate intuitive understanding of a state of the robotic lawn mower in an actual application scenario, the robotic lawn mower in FIG. 3A is presented in the form of a stick figure. Details are not described herein.

For example, as shown in FIG. 3A, there is a road surface bulge area with a height h in a current traveling direction of the robotic lawn mower. The robotic lawn mower compares the current height h with a preset threshold, where the preset threshold is a height threshold at which the robotic lawn mower will roll over or crash during the traveling process. When the height h shown in the upper part of FIG. 3A is not greater than the preset threshold, it indicates that the current bulge height is a safe height for the robotic lawn mower, and therefore the robotic lawn mower can control the robotic lawn mower to pass through this area normally and continue to perform the mowing task.

For example, if the height h shown in the lower part of FIG. 3A is greater than the preset threshold, it indicates that the current bulge height may bring a risk of overturning or crash to the robotic lawn mower, and therefore the robotic lawn mower can control the robotic lawn mower to bypass the current abnormal area and continue to perform the mowing task.

It can be learned that, in an implementation of the present disclosure, the robotic lawn mower compares a height of an actual road surface bulge area with a safe height that the robotic lawn mower can withstand, and then determines a traveling mode for the current area. In this way, the risk of collision or overturning of the robotic lawn mower when passing through the road surface bulge area can be effectively avoided, and the normal execution of the mowing task can be ensured.

In a possible example, the type of the abnormal area is the road surface depression. In terms of the configuring an avoidance plan for the abnormal area based on the type of the abnormal area, the method specifically includes the following steps: determining whether h exceeds a second threshold, where the second threshold is a safe height that does not cause the robotic lawn mower to be stranded; if it is determined that h does not exceed the second threshold, controlling the robotic lawn mower to operate consistently in the abnormal area; or if it is determined that h exceeds the second threshold, controlling the robotic lawn mower to bypass the abnormal area and then operate.

For example, referring to FIG. 3B, FIG. 3B is a diagram of an example scenario in which a robotic lawn mower passes through a road surface depression area according to an embodiment of the present disclosure. To facilitate intuitive understanding of a state of the robotic lawn mower in an actual application scenario, the robotic lawn mower in FIG. 3A is presented in the form of a stick figure. Details are not described herein.

Specifically, as shown in FIG. 3B, there is a road surface depression area with a height h in a current traveling direction of the robotic lawn mower. The robotic lawn mower compares the current height h with a preset threshold, where the preset threshold is a height threshold at which the robotic lawn mower will be stranded to be unable to move forward during traveling. When the height h shown in the upper part of FIG. 3B is not greater than the preset threshold, it indicates that the current depression height is a safe height for the robotic lawn mower, and therefore the robotic lawn mower can control the robotic lawn mower to pass through this area normally and continue to perform the mowing task.

For example, if the height h shown in the lower part of FIG. 3B is greater than the preset threshold, it indicates that the current depression height may bring a risk of stranding to the robotic lawn mower, and therefore the robotic lawn mower can control the robotic lawn mower to bypass the current abnormal area and continue to perform the mowing task.

In another possible example, a radius of the current abnormal area is determined based on area size information of the abnormal area in the abnormality description information, and the radius of the abnormal area is compared with a radius of a driving wheel of the robotic lawn mower; and if the radius of the current depression area is less than the radius of the driving wheel, it indicates that the robotic lawn mower can pass through the current abnormal area normally without a risk of stranding of the robotic lawn mower due to wheels getting stuck.

It can be learned that, in an implementation of the present disclosure, the robotic lawn mower compares a height of an actual road surface depression area with a safe height that the robotic lawn mower can withstand, and then determines a traveling manner for the current area. In this way, the risk of stranding of the robotic lawn mower when passing through the road surface depression area can be effectively avoided, and the normal execution of the mowing task can be ensured.

In a possible example, after the configuring an avoidance plan for the abnormal area based on the type of the abnormal area, the method specifically includes the following steps: adding the avoidance plan for the abnormal area to related information of the corresponding abnormal area; and planning an operation route for the robotic lawn mower based on the related information of the abnormal area.

Specifically, after configuring the avoidance plan for the abnormal area in the operation area where the robotic lawn mower is currently located, by invoking map information of the operation area and anchoring coordinate points of the abnormal area, the robotic lawn mower adds the avoidance plan to the related information of the corresponding abnormal area and saves it.

Further, the robotic lawn mower can obtain the map information of the current operation area, and plan traveling routes for the robotic lawn mower currently in the operation area based on the related information of the abnormal area in the map information. The traveling routes include traveling routes corresponding to avoidance plans for different abnormal areas that are saved by the robotic lawn mower.

Specifically, before entering the current operation area to perform a related mowing task, the robotic lawn mower obtains state information of the robotic lawn mower. The state information includes, but is not limited to, a start position, remaining power, etc. of the robotic lawn mower.

Further, an operation plan is made and a traveling execution route is planned for the robotic lawn mower based on the above state information and the corresponding map information of the operation area that is saved by the robotic lawn mower. The operation plan adapts to the strength that the current remaining power can support. The traveling route includes a detour for the abnormal area in the current operation area.

It can be learned that, in an implementation of the present disclosure, the robotic lawn mower adds the avoidance plan for the abnormal area to the related information of the corresponding abnormal area. In this way, operation routes can be planned, based on the related information of the abnormal area, for other robotic lawn mowers operating in the same operation area. In this way, the sharing of data of the abnormal area can be achieved, and traveling routes for different robotic lawn mowers can be planned in advance based on the related information of the abnormal area, thereby reducing the risk of rollover, crash, or stranding of the robotic lawn mower in the abnormal area, and improving the operation efficiency of the robotic lawn mower.

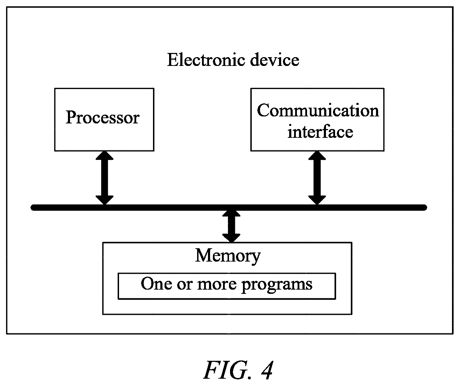

Consistent with the above embodiments, referring to FIG. 4, FIG. 4 is a diagram of a structure of an electronic device according to an embodiment of the present disclosure. As shown in the figure, the electronic device includes a processor, a memory, a communication interface, and one or more programs, where the one or more programs are stored in the memory and configured to be executed by the processor. In this embodiment of the present disclosure, the program includes instructions for performing the following steps:
when a predicament is detected during an operation process, determining an area at a current position as an abnormal area;
obtaining a sensing data set within a specified time period during the operation process, where the sensing data set is a set of data acquired by a sensor, and the specified time period represents a safe traveling time period before the robotic lawn mower gets into the predicament;
determining abnormality description information of the abnormal area based on the sensing data set, where the abnormality description information represents a type of a current abnormal area, and the type of the abnormal area includes a road surface depression and a road surface bulge; and
determining a target position corresponding to the abnormal area on an operation map, and establish an association relationship between the target position and the abnormality description information.

It can be learned that, according to the electronic device described in this embodiment of the present disclosure, when a predicament is detected during an operation process, it is determined an area at a current position as an abnormal area; a sensing data set within a specified time period during the operation process is obtained, where the sensing data set is a set of data acquired by a sensor, and the specified time period represents a safe traveling time period before the robotic lawn mower gets into the predicament; abnormality description information of the abnormal area is determined based on the sensing data set; and a target position corresponding to the abnormal area on an operation map is determined, and an association relationship is established between the target position and the abnormality description information. In this way, according to the method provided in the embodiments of the present disclosure, the abnormal area is determined based on related information of an operation area of the robotic lawn mower that is obtained by a sensing apparatus, the abnormal area is marked, and an avoidance plan is designed for the abnormal area, thereby reducing the occurrence of overturning or stranding of the robotic lawn mower during the operation process, and improving the operation efficiency of the robotic lawn mower.

The above mainly describes the solutions of the embodiments of the present disclosure from a perspective of a method implementation process. It can be understood that, to implement the above functions, corresponding hardware structures and/or software modules for performing the functions are included. Those skilled in the art should be easily aware that the example units, algorithms, and steps described with reference to the embodiments disclosed in the specification can be implemented in the present disclosure by hardware or a combination of hardware and computer software. Whether a function is performed by hardware or hardware driven by computer software depends on particular applications and design constraints of the technical solutions. Those skilled in the art can use different methods to implement the described functions for each particular application, but such implementation should not be considered as going beyond the scope of the present disclosure.

In the embodiments of the present disclosure, functional unit division can be performed based on the above method examples. For example, each functional unit may be obtained through division based on each corresponding function, or two or more functions may be integrated into one processing unit. The above integrated unit may be implemented in the form of hardware, or may be implemented in the form of a software functional unit. It should be noted that, in the embodiments of the present disclosure, division into the units is an example, and is merely a logical function division. In actual implementation, another division manner may be used.

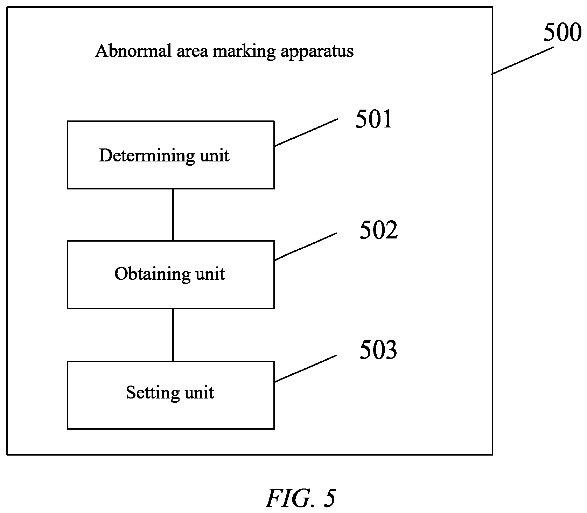

Referring to FIG. 5, FIG. 5 is a block diagram of functional units of an abnormal area marking apparatus according to an embodiment of the present disclosure. The apparatus 500 includes: a determining unit 501, an obtaining unit 502, and a setting unit 503, where
the determining unit 501 is configured to: when a predicament is detected during an operation process, determine an area at a current position as an abnormal area;
the obtaining unit 502 is configured to obtain a sensing data set within a specified time period during the operation process, where the sensing data set is a set of data acquired by a sensor, and the specified time period represents a safe traveling time period before the robotic lawn mower gets into the predicament;
the determining unit 501 is further configured to determine abnormality description information of the abnormal area based on the sensing data set; and
the setting unit 503 is configured to determine a target position corresponding to the abnormal area on an operation map, and establish an association relationship between the target position and the abnormality description information.

It can be learned that, according to the abnormal area marking apparatus described in this embodiment of the present disclosure, when a predicament is detected during an operation process, the determining unit determines an area at a current position as an abnormal area; the obtaining unit obtains a sensing data set within a specified time period during the operation process, where the sensing data set is a set of data acquired by a sensor, and the specified time period represents a safe traveling time period before the robotic lawn mower gets into the predicament; the determining unit determines abnormality description information of the abnormal area based on the sensing data set; and a target position corresponding to the abnormal area on an operation map is determined, and an association relationship is established between the target position and the abnormality description information through the setting unit. In this way, according to the method provided in the embodiments of the present disclosure, the abnormal area is determined based on related information of an operation area of the robotic lawn mower that is obtained by a sensing apparatus, the abnormal area is marked, and an avoidance plan is designed for the abnormal area, thereby reducing the occurrence of overturning or stranding of the robotic lawn mower during the operation process, and improving the operation efficiency of the robotic lawn mower.

In a possible example, before it is detected that the remaining power is insufficient, the determining unit 501 is specifically configured to:
when a predicament is detected during an operation process, determine an area at a current position as an abnormal area;
obtain a sensing data set within a specified time period during the operation process, where the sensing data set is a set of data acquired by a sensor, and the specified time period represents a safe traveling time period before the robotic lawn mower gets into the predicament;
determine abnormality description information of the abnormal area based on the sensing data set, where the abnormality description information represents a type of a current abnormal area, and the type of the abnormal area includes a road surface depression and a road surface bulge; and
determine a target position corresponding to the abnormal area on an operation map, and establish an association relationship between the target position and the abnormality description information.

In a possible example, the sensor includes a structured light sensor, and the structured light sensor includes a camera module and a single-line laser signal transmission module. In terms of the obtaining a sensing data set within a specified time period during the operation process, the obtaining unit 502 is specifically configured to:
obtain first sensing data of the robotic lawn mower at a first moment, where the first sensing data indicates a data stream captured by the structured light sensor during a traveling process of the robotic lawn mower, the data stream includes scanning data of the robotic lawn mower in a current operation area, and the scanning data includes image data and single-line laser signal transmission data;
obtain second sensing data of the robotic lawn mower at a second moment, where there is a preset time interval between the first moment and the second moment; and
construct the sensing data set based on the first sensing data and the second sensing data.

In a possible example, the scanning data includes the image data and the single-line laser signal transmission data.

In terms of the determining abnormality description information of the abnormal area based on the sensing data set, the determining unit 501 is specifically configured to:
determine an area size of the abnormal area in the operation area based on the image data in the first sensing data and the second sensing data;
determine a height difference h between the abnormal area and a normal operation area based on the single-line laser signal transmission data in the first sensing data and the second sensing data, where the height difference h represents a vertical distance that the abnormal area bulges upwards or sinks downwards;
determine a type of the abnormal area based on the height difference h;
if the height difference h is greater than 0, the type of the abnormal area is a road surface depression; or
if the height difference h is less than 0, the type of the abnormal area is a road surface bulge; and
determine the abnormality description information of the abnormal area based on the area size of the abnormal area and the type of the abnormal area.

In a possible example, after the determining abnormality description information of the abnormal area, the setting unit 503 is specifically configured to:
configure an avoidance plan for the abnormal area based on the type of the abnormal area, and control the robotic lawn mower to operate according to the avoidance plan.

In a possible example, the abnormal area is the road surface bulge. In terms of the configuring an avoidance plan for the abnormal area based on the type of the abnormal area, the setting unit 503 is specifically configured to:
determine whether h exceeds a first preset height, where the first preset height is a safe height that does not cause the robotic lawn mower to be overturned;
if it is determined that h does not exceed the first preset height, control the robotic lawn mower to operate consistently in the abnormal area; or
if it is determined that h exceeds the first preset height, control the robotic lawn mower to bypass the abnormal area and then operate.

In a possible example, the abnormal area is the road surface depression. In terms of the configuring an avoidance plan for the abnormal area based on the type of the abnormal area, the setting unit 503 is specifically configured to:
determine whether h exceeds a second preset height, where the second preset height is a safe height that does not cause the robotic lawn mower to be stranded;
if it is determined that h does not exceed the second preset height, control the robotic lawn mower to operate consistently in the abnormal area; or
if it is determined that h exceeds the second preset height, control the robotic lawn mower to bypass the abnormal area and then operate.

In a possible example, after the configuring an avoidance plan for the abnormal area based on the type of the abnormal area, the setting unit 503 is specifically configured to:
add the avoidance plan for the abnormal area to related information of the corresponding abnormal area; and
plan an operation route for the robotic lawn mower based on the related information of the abnormal area.

It can be understood that functions of program modules of the abnormal area marking apparatus in this embodiment may be specifically implemented based on the method in the above method embodiment. For a specific implementation process thereof, refer to related descriptions in the above method embodiment. Details are not described herein again.

It should be noted that all related content of the steps in the above method embodiment may be cited in function description of corresponding functional modules. Details are not described herein.

The electronic device provided in this embodiment is configured to perform the above abnormal area marking method, and therefore can achieve the same effects as the above implementation methods.

When an integrated unit is used, the electronic device may include a processing module, a storage module, and a communication module. The processing module may be configured to control and manage actions of the electronic device. For example, the processing module may be configured to support the electronic device to perform the steps performed by the determining unit 501, the obtaining unit 502, and the setting unit 503. The storage module may be configured to support the electronic device in storing program code, data, etc. The communication module may be configured to support communication between the electronic device and another device.

The processing module may be a processor or a controller. The processor may implement or execute various example logical blocks, modules, and circuits described with reference to content disclosed in the present disclosure. The processor may alternatively be a combination for implementing a computing function, for example, a combination of one or more microprocessors, a combination of a digital signal processor (DSP) and a microprocessor. The storage module may be a memory. The communication module may be specifically a device that interacts with another electronic device, such as a radio frequency circuit, a Bluetooth chip, or a Wi-Fi chip.

An embodiment of the present disclosure further provides a computer storage medium. The computer storage medium stores a computer program for electronic data exchange. The computer program enables a computer to perform some or all of the steps of any one of the methods described in the above method embodiments, and the computer includes a control platform.

An embodiment of the present disclosure further provides a computer program product. The computer program product includes a non-transitory computer-readable storage medium storing a computer program. The computer program is operable to cause a computer to perform some or all of the steps of any one of the methods described in the above method embodiments. The computer program product may be a software installation package, and the computer includes a control platform.

It should be noted that, for brief description, the above method embodiments are represented as a series of actions. However, those skilled in the art should appreciate that the present disclosure is not limited to the described order of the actions, because according to the present disclosure, some steps may be performed in another order or simultaneously. It should be further appreciated by those skilled in the art that the embodiments described in the specification all belong to preferred embodiments, and the involved actions and modules are not necessarily required by the present disclosure.

In the above embodiments, the description of each embodiment has respective focuses. For a part that is not described in detail in an embodiment, refer to related descriptions in other embodiments.

In the several embodiments provided in the present disclosure, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The above units described as separate parts may or may not be physically separate, and parts displayed as units may or may not be physical units, may be located in one position, or may be distributed on a plurality of network units. Some of or all of the units can be selected therefrom based on actual requirements to achieve the object of the solutions of the embodiments.

In addition, functional units in the embodiments of the present disclosure may be integrated into one processing unit, each of the units may exist alone physically, or two or more units are integrated into one unit. The above integrated unit may be implemented in the form of hardware, or may be implemented in the form of a software functional unit.

The above integrated unit, if implemented in the form of the software functional unit and sold or used as an independent product, may be stored in a computer-readable memory. Based on such an understanding, the technical solutions of the present disclosure essentially, or the part contributing to the prior art, or all or some of the technical solutions may be implemented in the form of a software product. The computer software product is stored in a memory and includes several instructions for instructing a computer device (which may be a personal computer, a server, a network device, etc.) to perform all or some of the steps of the methods described in the embodiments of the present disclosure. The above memory includes: a USB flash drive, a read-only memory (ROM), a random access memory (RAM), a mobile hard disk, a magnetic disk, an optical disc, or other various media capable of storing program code.

Those of ordinary skill in the art may understand that all or some of the steps of the methods in the embodiments may be implemented by a program instructing related hardware. The program may be stored in a computer-readable memory. The memory may include: a flash drive, a read-only memory (ROM), a random access memory, (RAM), a magnetic disk, an optical disc, etc.

The embodiments of the present disclosure are described in detail above. The principles and implementations of the present disclosure are described in the specification through specific examples. The description about the embodiments is merely provided to help understand the method and core ideas of the present disclosure.

## Claims

1. An abnormal area marking method, wherein the method is implemented by a processor for a robotic lawn mower and comprises:
determining an area at a current position as an abnormal area; when a predicament is detected during an operation process;
obtaining a sensing data set within a specified time period during the operation process, wherein the sensing data set is a set of data acquired by a sensor, and the specified time period represents a safe traveling time period before the robotic lawn mower gets into the predicament;
determining abnormality description information of the abnormal area based on the sensing data set, types of the abnormal areas comprises a road surface depression and a road surface bulge ; and
determining a target position corresponding to the abnormal area on an operation map, and establishing an association relationship between the target position and the abnormality description information;
obtaining a height information of the abnormal area, and controlling the robotic lawn mower to operate normally in the abnormal area or bypass the abnormal area based on the height information.

2. The abnormal area marking method according to claim 1, **characterized in that** the sensor comprises a structured light sensor, and the structured light sensor comprises a camera module and a single-line laser signal transmission module; and
the obtaining a sensing data set within a specified time period during the operation process comprises:
obtaining first sensing data of the robotic lawn mower at a first moment, wherein the first sensing data indicates a data stream captured by the structured light sensor during a traveling process of the robotic lawn mower, the data stream comprises scanning data of the robotic lawn mower in a current operation area, and the scanning data comprises image data and single-line laser signal transmission data;
obtaining second sensing data of the robotic lawn mower at a second moment, wherein there is a preset time interval between the first moment and the second moment; and
constructing the sensing data set based on the first sensing data and the second sensing data.

3. The abnormal area marking method according to claim 2, **characterized in that** the scanning data comprises the image data and the single-line laser signal transmission data; and
the determining abnormality description information of the abnormal area based on the sensing data set comprises:
determining an area size of the abnormal area in the operation area based on the image data in the first sensing data and the second sensing data;
determining a height difference *h* between the abnormal area and a normal operation area based on the single-line laser signal transmission data in the first sensing data and the second sensing data, wherein the height difference *h* represents a vertical distance that the abnormal area bulges upwards or sinks downwards;
determining the type of the abnormal area based on the height difference *h*;
when a height corresponding to the abnormal area is greater than a height corresponding to the normal operation area, it indicates that the type of the abnormal area is the road surface depression; or
when a height corresponding to the abnormal area is less than a height corresponding to the normal operation area, it indicates that the type of the abnormal area is the road surface bulge; and
determining the abnormality description information of the abnormal area based on the area size of the abnormal area and the type of the abnormal area.

4. The abnormal area marking method according to claim 3, **characterized in that** after the determining abnormality description information of the abnormal area, the method further comprises:
configuring an avoidance plan for the abnormal area based on the type of the abnormal area, and controlling the robotic lawn mower to operate according to the avoidance plan.

5. The abnormal area marking method according to claim 4, **characterized in that** the type of the abnormal area is the road surface bulge; and
the configuring an avoidance plan for the abnormal area based on the type of the abnormal area comprises:
determining whether the height difference *h* exceeds a first preset height, wherein the first preset height is a safe height that does not cause the robotic lawn mower to be overturned; and
when it is determined that the height difference *h* does not exceed the first preset height, controlling the robotic lawn mower to operate consistently in the abnormal area; or
when it is determined that the height difference *h* exceeds the first preset height, controlling the robotic lawn mower to bypass the abnormal area and then operate.

6. The abnormal area marking method according to claim 4, **characterized in that** the type of the abnormal area is the road surface depression; and
the configuring an avoidance plan for the abnormal area based on the type of the abnormal area comprises:
determining whether the height difference *h* exceeds a second preset height, wherein the second preset height is a safe height that does not cause the robotic lawn mower to be stranded;
when it is determined that the height difference *h* does not exceed the second preset height, controlling the robotic lawn mower to operate consistently in the abnormal area; or
when it is determined that the height difference *h* exceeds the second preset height, controlling the robotic lawn mower to bypass the abnormal area and then operate.

7. The method according to any one of claims 4 to 6, **characterized in that** after the configuring an avoidance plan for the abnormal area based on the type of the abnormal area, the method further comprises:
adding the avoidance plan for the abnormal area to related information of the corresponding abnormal area; and
planning an operation route for the robotic lawn mower based on the related information of the abnormal area.

8. An abnormal area marking apparatus, configured to perform the method of any of claims 1 to 7, wherein the apparatus is used for a robotic lawn mower and comprises: a determining unit, an obtaining unit, and a setting unit, wherein
the determining unit is configured to: determine an area at a current position as an abnormal area, when a predicament is detected during an operation process;
the obtaining unit is configured to obtain a sensing data set within a specified time period during the operation process, wherein the sensing data set is a set of data acquired by a sensor, and the specified time period represents a safe traveling time period before the robotic lawn mower gets into the predicament;
the determining unit is further configured to determine an abnormality description information of the abnormal area based on the sensing data set, wherein the abnormality description information represents a type of a current abnormal area, and the type of the abnormal area comprises a road surface depression and a road surface bulge; and
the setting unit is configured to determine a target position corresponding to the abnormal area on an operation map, and establish an association relationship between the target position and the abnormality description information.

9. A computer program product comprising instructions which, when the program is executed by a processor, cause the processor to carry out the method of any of claims 1 to 7.

10. An electronic device, comprising:
one or more processor,
one or more memory, storing the computer program product of claim 9.

11. The electronic device of claim 10, wherein the electronic device is a robotic lawn mower.

## Patentansprüche

1. Verfahren zum Markieren eines anormalen Bereichs, wobei das Verfahren durch einen Prozessor für einen Rasenmäherroboter implementiert wird und Folgendes umfasst:
Bestimmen eines Bereichs an einer aktuellen Position als anormaler Bereich; wenn eine Zwangslage während eines Betriebsprozesses detektiert wird;
Erhalten eines Erfassungsdatensatzes innerhalb eines vorgegebenen Zeitraums während des Betriebsprozesses, wobei es sich bei dem Erfassungsdatensatz um einen Satz von Daten handelt, der durch einen Sensor erlangt wird, und der vorgegebene Zeitraum einen sicheren Fahrzeitraum darstellt, bevor der Rasenmäherroboter in die Zwangslage gerät;
Bestimmen von Anomaliebeschreibungsinformationen des anormalen Bereichs basierend auf dem Erfassungsdatensatz, wobei Arten der anormalen Bereiche eine Straßenoberflächenvertiefung und eine Straßenoberflächenwölbung umfassen; und
Bestimmen einer Zielposition, die dem anormalen Bereich entspricht, auf einer Betriebskarte, und Herstellen einer Zuordnungsbeziehung zwischen der Zielposition und den Anomaliebeschreibungsinformationen;
Erhalten von Höheninformationen des anormalen Bereichs und Steuern des Rasenmäherroboters, um basierend auf den Höheninformationen normal in dem anormalen Bereich betrieben zu werden oder den anormalen Bereich zu umgehen.

2. Verfahren zum Markieren eines anormalen Bereichs nach Anspruch 1, **dadurch gekennzeichnet, dass** der Sensor einen strukturierten Lichtsensor umfasst und der strukturierte Lichtsensor ein Kameramodul und ein einzeiliges Lasersignalübertragungsmodul umfasst; und
das Erhalten eines Erfassungsdatensatzes innerhalb eines vorgegebenen Zeitraums während des Betriebsprozesses Folgendes umfasst:
Erhalten von ersten Erfassungsdaten des Rasenmäherroboters zu einem ersten Zeitpunkt, wobei die ersten Erfassungsdaten einen Datenstrom angeben, der durch den strukturierten Lichtsensor während eines Fahrprozesses des Rasenmäherroboters erfasst wird, der Datenstrom Abtastdaten des Rasenmäherroboters in einem aktuellen Betriebsbereich umfasst und die Abtastdaten Bilddaten und einzeilige Lasersignalübertragungsdaten umfassen;
Erhalten zweiter Erfassungsdaten des Rasenmäherroboters zu einem zweiten Zeitpunkt, wobei ein voreingestelltes Zeitintervall zwischen dem ersten Zeitpunkt und dem zweiten Zeitpunkt vorhanden ist; und
Konstruieren des Erfassungsdatensatzes basierend auf den ersten Erfassungsdaten und den zweiten Erfassungsdaten.

3. Verfahren zum Markieren eines anormalen Bereichs nach Anspruch 2, **dadurch gekennzeichnet, dass** die Abtastdaten die Bilddaten und die einzeiligen Lasersignalübertragungsdaten umfassen; und
das Bestimmen von Anomaliebeschreibungsinformationen des anormalen Bereichs basierend auf dem Erfassungsdatensatz Folgendes umfasst:
Bestimmen einer Bereichsgröße des anormalen Bereichs in dem Betriebsbereich basierend auf den Bilddaten in den ersten Erfassungsdaten und den zweiten Erfassungsdaten;
Bestimmen einer Höhendifferenz *h* zwischen dem anormalen Bereich und einem normalen Betriebsbereich basierend auf den einzeiligen Lasersignalübertragungsdaten in den ersten Erfassungsdaten und den zweiten Erfassungsdaten, wobei die Höhendifferenz *h* eine vertikale Entfernung darstellt, die der anormale Bereich sich nach oben wölbt oder nach unten sinkt;
Bestimmen der Art des anormalen Bereichs basierend auf der Höhendifferenz *h*;
wenn eine Höhe, die dem anormalen Bereich entspricht, größer als eine Höhe ist, die dem normalen Betriebsbereich entspricht, dies angibt, dass die Art des anormalen Bereichs die Straßenoberflächenvertiefung ist; oder
wenn eine Höhe, die dem anormalen Bereich entspricht, kleiner als eine Höhe ist, die dem normalen Betriebsbereich entspricht, dies angibt, dass die Art des anormalen Bereichs die Straßenoberflächenwölbung ist; und
Bestimmen der Anomaliebeschreibungsinformationen des anormalen Bereichs basierend auf der Bereichsgröße des anormalen Bereichs und der Art des anormalen Bereichs.

4. Verfahren zum Markieren eines anormalen Bereichs nach Anspruch 3, **dadurch gekennzeichnet, dass** das Verfahren nach dem Bestimmen von Anomaliebeschreibungsinformationen des anormalen Bereichs ferner Folgendes umfasst:
Konfigurieren eines Vermeidungsplans für den anormalen Bereich basierend auf der Art des anormalen Bereichs und Steuern des Rasenmäherroboters, um entsprechend dem Vermeidungsplan betrieben zu werden.

5. Verfahren zum Markieren eines anormalen Bereichs nach Anspruch 4, **dadurch gekennzeichnet, dass** die Art des anormalen Bereichs die Straßenoberflächenwölbung ist; und
das Konfigurieren eines Vermeidungsplans für den anormalen Bereich basierend auf der Art des anormalen Bereichs Folgendes umfasst:
Bestimmen, ob die Höhendifferenz *h* eine erste voreingestellte Höhe überschreitet, wobei die erste voreingestellte Höhe eine sichere Höhe ist, die nicht dazu führt, dass der Rasenmäherroboter umgeworfen wird; und
wenn bestimmt ist, dass die Höhendifferenz *h* die erste voreingestellte Höhe nicht überschreitet, Steuern des Rasenmäherroboters, um konsistent in dem anormalen Bereich betrieben zu werden; oder
wenn bestimmt wird, dass die Höhendifferenz *h* die erste voreingestellte Höhe überschreitet, Steuern des Rasenmäherroboters, um den anormalen Bereich zu umgehen und dann betrieben zu werden.

6. Verfahren zum Markieren eines anormalen Bereichs nach Anspruch 4, **dadurch gekennzeichnet, dass** die Art des anormalen Bereichs die Straßenoberflächenvertiefung ist; und
das Konfigurieren eines Vermeidungsplans für den anormalen Bereich basierend auf der Art des anormalen Bereichs Folgendes umfasst:
Bestimmen, ob die Höhendifferenz *h* eine zweite voreingestellte Höhe überschreitet, wobei die zweite voreingestellte Höhe eine sichere Höhe ist, die nicht dazu führt, dass der Rasenmäherroboter liegen bleibt;
wenn bestimmt ist, dass die Höhendifferenz *h* die zweite voreingestellte Höhe nicht überschreitet, Steuern des Rasenmäherroboters, um konsistent in dem anormalen Bereich betrieben zu werden; oder
wenn bestimmt wird, dass die Höhendifferenz *h* die zweite voreingestellte Höhe überschreitet, Steuern des Rasenmäherroboters, um den anormalen Bereich zu umgehen und dann betrieben zu werden.

7. Verfahren nach einem der Ansprüche 4 bis 6, **dadurch gekennzeichnet, dass** das Verfahren nach dem Konfigurieren eines Vermeidungsplans für den anormalen Bereich basierend auf der Art des anormalen Bereichs ferner Folgendes umfasst:
Hinzufügen des Vermeidungsplans für den anormalen Bereich zu zugehörigen Informationen des entsprechenden anormalen Bereichs; und
Planen einer Betriebsroute für den Rasenmäherroboter basierend auf den zugehörigen Informationen des anormalen Bereichs.

8. Vorrichtung zum Markieren eines anormalen Bereichs, die zum Durchführen des Verfahrens nach einem der Ansprüche 1 bis 7 konfiguriert ist, wobei die Vorrichtung für einen Rasenmäherroboter verwendet wird und Folgendes umfasst: eine Bestimmungseinheit, eine Erhaltungseinheit und eine Einstellungseinheit, wobei
die Bestimmungseinheit zu Folgendem konfiguriert ist: Bestimmen eines Bereichs an einer aktuellen Position als anormaler Bereich, wenn während eines Betriebsprozesses eine Zwangslage detektiert wird;
die Erhaltungseinheit dazu konfiguriert ist, einen Erfassungsdatensatz innerhalb eines vorgegebenen Zeitraums während des Betriebsprozesses zu erhalten, wobei der Erfassungsdatensatz ein Satz von Daten ist, die durch einen Sensor erfasst werden, und der vorgegebene Zeitraum einen sicheren Fahrzeitraum darstellt, bevor der Rasenmäherroboter in die Zwangslage gerät;
die Bestimmungseinheit ferner dazu konfiguriert ist, Anomaliebeschreibungsinformationen des anormalen Bereichs basierend auf dem Erfassungsdatensatz zu bestimmen, wobei die Anomaliebeschreibungsinformationen eine Art eines aktuellen anormalen Bereichs darstellen und die Art des anormalen Bereichs eine Straßenoberflächenvertiefung und eine Straßenoberflächenwölbung umfasst; und
wobei die Einstellungseinheit dazu konfiguriert ist, eine Zielposition, die dem anormalen Bereich entspricht, auf einer Betriebskarte zu bestimmen, und eine Zuordnungsbeziehung zwischen der Zielposition und den Anomaliebeschreibungsinformationen herzustellen.

9. Computerprogrammprodukt, umfassend Anweisungen, die bei Ausführung des Programms durch einen Prozessor den Prozessor dazu veranlassen, das Verfahren nach einem der Ansprüche 1 bis 7 auszuführen.

10. Elektronisches Gerät, umfassend:
einen oder mehrere Prozessoren,
einen oder mehrere Speicher, auf denen das Computerprogrammprodukt nach Anspruch 9 gespeichert ist.

11. Elektronisches Gerät nach Anspruch 10, wobei das elektronische Gerät ein Rasenmäherroboter ist.

## Revendications

1. Procédé de marquage de zone anormale, dans lequel le procédé est mis en œuvre par un processeur pour une tondeuse à gazon robotisée et comprend :
la détermination d'une zone à une position actuelle en tant que zone anormale ; lorsqu'une situation problématique est détectée au cours d'un processus de fonctionnement ;
l'obtention d'un ensemble de données de détection dans une période de temps spécifiée au cours du processus de fonctionnement, dans lequel l'ensemble de données de détection est un ensemble de données acquises par un capteur, et la période de temps spécifiée représente une période de temps de déplacement sans danger avant que la tondeuse à gazon robotisée n'entre dans la situation problématique ;
la détermination d'informations de description d'anomalie de la zone anormale sur la base de l'ensemble de données de détection, les types de zones anormales comprennent un creux de surface de route et un renflement de surface de route ; et
la détermination d'une position cible correspondant à la zone anormale sur une carte de fonctionnement, et l'établissement d'une relation d'association entre la position cible et les informations de description d'anomalie ;
l'obtention d'une information de hauteur de la zone anormale, et la commande à la tondeuse à gazon robotisée de fonctionner normalement dans la zone anormale ou de contourner la zone anormale sur la base de l'information de hauteur.

2. Procédé de marquage de zone anormale selon la revendication 1, **caractérisé en ce que** le capteur comprend un capteur de lumière structurée, et le capteur de lumière structurée comprend un module de caméra et un module de transmission de signal laser monoligne ; et
l'obtention d'un ensemble de données de détection dans une période de temps spécifiée au cours du processus de fonctionnement comprend :
l'obtention de premières données de détection de la tondeuse à gazon robotisée à un premier instant, dans lequel les premières données de détection indiquent un flux de données capturé par le capteur de lumière structurée au cours d'un processus de déplacement de la tondeuse à gazon robotisée, le flux de données comprend des données de balayage de la tondeuse à gazon robotisée dans une zone de fonctionnement actuelle, et les données de balayage comprennent des données d'image et des données de transmission de signal laser monoligne ;
l'obtention de deuxièmes données de détection de la tondeuse à gazon robotisée à un deuxième instant, dans lequel il existe un intervalle de temps prédéfini entre le premier instant et le deuxième instant ; et
la construction de l'ensemble de données de détection sur la base des premières données de détection et des deuxièmes données de détection.

3. Procédé de marquage de zone anormale selon la revendication 2, **caractérisé en ce que** les données de balayage comprennent les données d'image et les données de transmission de signal laser monoligne ; et
la détermination des informations de description d'anomalie de la zone anormale sur la base de l'ensemble de données de détection comprend :
la détermination d'une taille de zone de la zone anormale dans la zone de fonctionnement sur la base des données d'image dans les premières données de détection et les deuxièmes données de détection ;
la détermination d'une différence de hauteur *h* entre la zone anormale et une zone de fonctionnement normal sur la base des données de transmission de signal laser monoligne dans les premières données de détection et les deuxièmes données de détection, dans lequel la différence de hauteur *h* représente une distance verticale sur laquelle la zone anormale se renfle vers le haut ou s'enfonce vers le bas ;
la détermination du type de zone anormale sur la base de la différence de hauteur *h* ;
lorsqu'une hauteur correspondant à la zone anormale est supérieure à une hauteur correspondant à la zone de fonctionnement normal, cela indique que le type de la zone anormale est le creux de surface de route ; ou
lorsqu'une hauteur correspondant à la zone anormale est inférieure à une hauteur correspondant à la zone de fonctionnement normal, cela indique que le type de la zone anormale est le renflement de surface de route ; et
la détermination des informations de description d'anomalie de la zone anormale sur la base de la taille de zone de la zone anormale et du type de zone anormale.

4. Procédé de marquage de zone anormale selon la revendication 3, **caractérisé en ce qu'**après la détermination des informations de description d'anomalie de la zone anormale, le procédé comprend en outre :
la configuration d'un plan d'évitement pour la zone anormale sur la base du type de la zone anormale, et la commande à la tondeuse à gazon robotisée de fonctionner selon le plan d'évitement.

5. Procédé de marquage de zone anormale selon la revendication 4, **caractérisé en ce que** le type de la zone anormale est le renflement de surface de route ; et
la configuration d'un plan d'évitement pour la zone anormale sur la base du type de la zone anormale comprend :
la détermination si la différence de hauteur *h* dépasse une première hauteur prédéfinie, dans lequel la première hauteur prédéfinie est une hauteur sans danger qui ne provoque pas le renversement de la tondeuse à gazon robotisée ; et
lorsqu'il est déterminé que la différence de hauteur *h* ne dépasse pas la première hauteur prédéfinie, la commande à la tondeuse à gazon robotisée de fonctionner de manière cohérente dans la zone anormale ; ou
lorsqu'il est déterminé que la différence de hauteur *h* dépasse la première hauteur prédéfinie, la commande à la tondeuse à gazon robotisée de contourner la zone anormale, puis de poursuivre son fonctionnement.

6. Procédé de marquage de zone anormale selon la revendication 4, **caractérisé en ce que** le type de la zone anormale est la dépression de surface de route ; et
la configuration d'un plan d'évitement pour la zone anormale sur la base du type de la zone anormale comprend :
la détermination si la différence de hauteur *h* dépasse une deuxième hauteur prédéfinie, dans lequel la deuxième hauteur prédéfinie est une hauteur sans danger qui ne provoque pas l'immobilisation de la tondeuse à gazon robotisée ;
lorsqu'il est déterminé que la différence de hauteur *h* ne dépasse pas la deuxième hauteur prédéfinie, la commande à la tondeuse à gazon robotisée de fonctionner de manière continue dans la zone anormale ; ou
lorsqu'il est déterminé que la différence de hauteur *h* dépasse la deuxième hauteur prédéfinie, la commande à la tondeuse à gazon robotisée de contourner la zone anormale, puis de poursuivre son fonctionnement.

7. Procédé selon l'une quelconque des revendications 4 à 6, **caractérisé en ce qu'**après la configuration d'un plan d'évitement pour la zone anormale sur la base du type de la zone anormale, le procédé comprend en outre :
l'ajout du plan d'évitement pour la zone anormale à des informations connexes de la zone anormale correspondante ; et
la planification d'un itinéraire de fonctionnement pour la tondeuse à gazon robotisée sur la base des informations connexes de la zone anormale.

8. Appareil de marquage de zone anormale, configuré pour exécuter le procédé selon l'une quelconque des revendications 1 à 7, dans lequel l'appareil est utilisé pour une tondeuse à gazon robotisée et comprend : une unité de détermination, une unité d'obtention et une unité de réglage, dans lequel
l'unité de détermination est conçue pour : déterminer une zone à une position actuelle en tant que zone anormale, lorsqu'une situation problématique est détectée au cours d'un processus d'e fonctionnement ;
l'unité d'obtention est configurée pour obtenir un ensemble de données de détection dans une période de temps spécifiée au cours du processus de fonctionnement, dans lequel l'ensemble de données de détection est un ensemble de données acquises par un capteur, et la période de temps spécifiée représente une période de temps de déplacement sans danger avant que la tondeuse à gazon robotisée n'entre dans la situation problématique ;
l'unité de détermination est en outre configurée pour déterminer des informations de description d'anomalie de la zone anormale sur la base de l'ensemble de données de détection, dans lequel les informations de description d'anomalie représentent un type de zone anormale actuelle, et le type de zone anormale comprend un creux de surface de route et un renflement de surface de route ; et
l'unité de réglage est configurée pour déterminer une position cible correspondant à la zone anormale sur une carte de fonctionnement, et pour établir une relation d'association entre la position cible et les informations de description d'anomalie.

9. Produit de programme informatique comprenant des instructions qui, lorsque le programme est exécuté par un processeur, amènent le processeur à effectuer le procédé selon l'une quelconque des revendications 1 à 7.

10. Dispositif électronique, comprenant :
un ou plusieurs processeurs,
une ou plusieurs mémoires, stockant le produit-programme informatique selon la revendication 9.

11. Dispositif électronique selon la revendication 10, dans lequel le dispositif électronique est une tondeuse à gazon robotisée.
